# FASCICULE DE BREVET EUROPEEN

(11) **EP 3 650 956 B1**
(45) Date de publication et mention de la délivrance du brevet: **02.09.2026**
(21) Numéro de dépôt: 18205010.4
(22) Date de dépôt: 07.11.2018
(51) Int. Cl.: H04R 1/02, G04G 13/00, G04C 21/38, G04G 21/00, H04R 17/10

(54) **PROCÉDÉ DE DIFFUSION D'UN SIGNAL ACOUSTIQUE ET D'UN MESSAGE TACTILE**
VERBREITUNGSVERFAHREN EINES AKUSTISCHEN SIGNALS UND EINER TAKTILEN MELDUNG
METHOD FOR BROADCASTING AN ACOUSTIC SIGNAL AND A TACTILE MESSAGE

(43) Date de publication de la demande: 13.05.2020
(73) Titulaire: Tissot S.A., 2400 Le Locle (CH)
(72) Inventeur: FRANZI, Edoardo, 1400 Cheseaux-Noréaz (CH); PORRET, Alain-Serge, 2000 Neuchâtel (CH)
(74) Mandataire: ICB SA

(56) Documents cités:
- JP-A- S55 116 292
- JP-U- S5 669 795
- US-A- 4 242 745
- US-A1- 2013 142 016

## Description

### Domaine technique

La présente invention concerne un procédé de diffusion d'un signal acoustique et d'un message tactile à un porteur d'une montre.

L'invention concerne également une montre mettant en œuvre ce procédé ainsi qu'un programme d'ordinateur.

### Art antérieur

Dans l'état de la technique, la réception de messages de notification est classiquement signalée dans les montres par une alerte consistant en l'émission d'un signal acoustique diffusé par une interface sonore composée d'un haut-parleur. Toutefois, une telle interface sonore consomme une quantité d'énergie importante dans le cadre de son fonctionnement ce qui est alors problématique pour de telles montres dont la capacité énergétique est limitée. Le document JP 555 116292 A divulgue une montre à porter au poignet comprenant une pluralité d'éléments piézoélectriques avec des plages de fréquences pour émettre des sons variés.

On comprend qu'il existe alors un besoin de trouver une solution alternative, notamment qui ne présente pas les inconvénients de l'art antérieur.

### Résumé de l'invention

L'objet de l'invention est de fournir un procédé de diffusion d'un signal acoustique et d'un message tactile à un porteur d'une montre telle que défini dans la revendication 1.

Un autre objet de l'invention est réalisé par une montre telle que définie dans la revendication 6.

Un autre objet encore de l'invention est réalisé par une programme d'ordinateur tel que défini dans la revendication 8.

### Brève description des figures

D'autres particularités et avantages ressortiront clairement de la description qui en est faite ci-après, à titre indicatif et nullement limitatif, en référence aux figures annexées, dans lesquelles :
- la figure 1 représente un logigramme portant sur un procédé de diffusion d'un signal acoustique et d'un message tactile à un porteur d'une montre, selon un mode de réalisation de l'invention, et
- la figure 2 représente une montre mettant en œuvre ce procédé, selon le mode de réalisation de l'invention.

### Description détaillée de l'invention

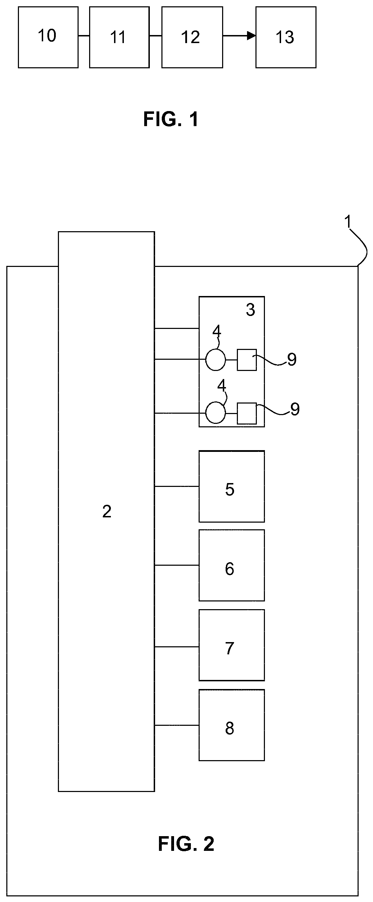

Sur la figure 1 est illustré un procédé de diffusion d'un signal acoustique et d'un message tactile à un porteur d'une montre 1. Ce procédé vise à aviser/informer le porteur de la montre 1 de l'identification d'un événement relatif à une ou plusieurs fonctions de la montre 1 et ce, par l'intermédiaire d'une diffusion d'un signal acoustique spécifique à l'événement identifié et d'un message tactile. Un tel procédé permet de piloter de manière distincte des éléments piézoélectriques 4 agencés dans la montre 1 afin de participer à la production de ce signal acoustique. Par exemple, ce signal acoustique peut reproduire le bruit du « tic-tac » d'un mouvement mécanique dû au déplacement de la trotteuse lorsqu'elle « saute » chaque seconde sous l'effet d'un mécanisme de régulation comme un balancier. Dans cet exemple particulièrement intéressant pour une montre 1 pourvue d'un mouvement électronique, l'événement identifié peut être l'activation d'un mode de fonctionnement de la montre par exemple par le choix de ce mode de fonctionnement dans un menu contextuel de la montre 1. On notera que ce signal acoustique est associé à un message tactile relatif à l'événement détecté diffusé par une interface de rendu tactile de la montre 1 comprise dans une interface sonore de cette montre 1. A la suite de l'identification d'un événement, en plus de la diffusion d'un son/bruit par la montre un message tactile spécifique à l'événement identifié est aussi diffusé au porteur de manière simultanée ou sensiblement simultanée. Un tel message correspond à :
- la réalisation d'un contour d'une représentation graphique tel qu'un motif/symbole, une lettre, un chiffre de manière tactile c'est-à-dire comme cela est réalisable par le déplacement de la pointe d'un doigt d'un individu sur la peau du porteur ; alternativement, en dehors de l'invention revendiquée, un tel message peut correspondre à :
   - l'application de la représentation graphique sur la peau du porteur par exemple l'application de la forme d'une lettre ou d'un symbole/motif ;
   - la génération de phénomène ondulatoire et/ou vibratoire visant par exemple à créer pour le porteur une perception tactile douce, agréable, sensuelle ou à l'inverse désagréable.

Dans ce contexte, ce message tactile diffusé avec le son/bruit notamment par l'intermédiaire de l'interface sonore 3 permet au porteur de percevoir le message par voie tactile en plus du son perçu par voie auditive. Autrement dit, la réception de ce message par le porteur fait appel à une perception sensorielle tactile de ce dernier. Dans un exemple, le porteur peut percevoir sur sa peau, en plus du son/bruit, une sensation d'une caresse si l'événement identifié porte sur un appel manqué provenant de sa petite amie ou encore dans une variante, il peut percevoir sur sa peau la réalisation d'un contour de la forme d'un cœur.

Un tel procédé est mis en œuvre par une montre 1 notamment une montre connectée. Une telle montre 1 visible sur la figure 2, comprend de manière non exhaustive et non limitative :
- une unité de traitement 2 comportant des ressources matérielles et logicielles en particulier au moins un processeur coopérant avec des éléments de mémoire ;
- l'interface sonore 3 comportant une pluralité d'éléments piézoélectriques 4 chaque élément 4 étant susceptible de convertir un signal électrique en des oscillations/pulsations mécaniques ;
- l'interface de rendu tactile comprise dans l'interface sonore 3 et comportant donc également une pluralité d'éléments piézoélectriques 4 ;
- un cadran d'affichage 5 hybride pourvu d'une première composante d'affichage analogique et d'une deuxième composante d'affichage numérique et/ou alphanumérique ;
- un module de communication 6 ;
- un mouvement 7 mécanique ou électronique, et
- des capteurs 8 environnementaux, comportementaux et/ou physiologiques.

Cette unité de traitement 2 de la montre 1 est reliée/connectée entre autres à l'interface sonore 3, à l'interface de rendu tactile, aux éléments piézoélectriques 4, au cadran d'affichage 5, au module de communication 6, au mouvement 7 et aux capteurs 8 environnementaux, comportementaux et/ou physiologiques.

Dans cette montre 1, l'interface sonore 3 est définie dans une boite de montre 1 et/ou dans un bracelet de cette montre. Cette interface sonore 3 et donc également l'interface de rendu tactile, comprend des éléments piézoélectriques 4 et au moins un élément de support déformable 9 associé audits éléments piézoélectriques 4. Chaque élément piézoélectrique 4 peut par exemple être fabriqué en une céramique piézoélectrique ou en un matériau piézopolymère souple (polyfluorure de vinylidène - PVDF), et peut avoir, de manière non limitative, une forme circulaire et/ou être un film ou une pellicule. Un tel élément piézoélectrique 4 peut avoir des dimensions caractéristiques de l'ordre de quelques millimètres carrés voire de quelques micromètres carrés avec une épaisseur faible d'environ quelques millimètres voire quelques micromètres. Cet élément piézoélectrique 4 est apte à recevoir des instructions de commande de l'unité de traitement 2 pour déformer par vibration ledit au moins un élément de support 9. L'élément de support déformable 9 encore appelé élément de support acoustique 9 est par exemple une plaque. On comprend que le terme « plaque » est ici utilisé pour définir un élément sensiblement bidimensionnel, dont l'épaisseur est faible au regard de sa longueur et de sa largeur. La plaque peut être incurvée et présenter un galbe donné.

La déformation par vibration de l'élément de support 9 est effectuée selon une plage de fréquence de vibration qui permet de produire un effet sonore et donc la génération d'un signal acoustique, en générant un déplacement de l'air autour de l'élément de support 9. La plage de fréquence de vibration est directement fonction de la matière de l'élément de support 9. A titre d'exemple, si l'élément de support 9 est réalisée en P.M.M.A, la plage de fréquence correspondante s'étend de 20Hz à 20kHz. On peut envisager une séquence déterminée de déformations par vibration de l'élément de support 9 à haute fréquence pour que la succession d'effets sonores forme une musique/mélodie. Il convient de noter que ce n'est pas ici le mouvement de l'élément piézoélectrique 4 qui produit directement le son en troublant l'air à proximité, mais c'est bien le mouvement de l'élément de support 9 sur laquelle repose l'élément piézoélectrique 4 qui produit cette perturbation et donc le signal acoustique.

Dans un premier exemple de réalisation, les éléments piézoélectriques 4 de cette interface sonore 3 peuvent être agencés sur tout ou partie de la surface d'un élément de support 9 formant le fond de la boite de montre 1. Dans un deuxième exemple, ces éléments piézoélectriques 4 peuvent être agencés dans le bracelet, en particulier sur tout ou partie de la surface d'un l'élément de support 9 compris dans au moins un brin de ce bracelet. Dans un troisième exemple, ces éléments piézoélectriques 4 peuvent être agencés à la fois dans tout ou partie de la surface de l'élément de support 9 compris dans le fond de la boite de montre et dans au moins un brin du bracelet. Dans un quatrième exemple chaque élément piézoélectrique 4 de cette interface sonore 3 peut être associé avec un élément de support 9 distinct, autrement dit l'interface sonore 3 comprend autant d'éléments piézoélectriques 4 qu'elle comprend d'éléments de support 9. Ainsi des ensembles élément piézoélectrique 4 et élément de support 9 peuvent être agencés dans la boite de montre et/ou dans le bracelet. Dans un cinquième exemple, le fond de la boite de montre peut être divisé en plusieurs éléments de support 9 sur chacun desquels peut être disposé au moins un élément piézoélectrique 4.

On notera que dans cette montre 1, chaque élément piézoélectrique 4 est relié/connecté distinctement à l'unité de traitement 2. Autrement dit, l'unité de traitement 2 est apte à piloter individuellement et/ou distinctement chaque élément piézoélectrique 4 de cette interface sonore 3.

On notera que les éléments piézoélectriques 4 et le ou les éléments de support déformable 9 de l'interface de rendu tactile compris dans l'interface sonore 3, sont disposés de la même manière que ceux qui sont compris dans cette interface sonore 3. Cependant ces éléments 4, 9 de cette interface de rendu tactile sont définis dans toute ou juste une portion d'une partie de la montre 1, ladite partie étant destinée à être en contact avec la peau du porteur par exemple celle définie au niveau de son poignée. On remarquera que l'interface de rendu tactile peut comprendre une membrane de support déformable dans laquelle sont agencés que les éléments piézoélectriques 4 et le ou les éléments de support déformable 9. Dans cette exemple, cette membrane peut alors être une pièce rapportée à la montre 1 en étant fixée à la face de contact avec la peau du porteur du fond de la boite de montre et/ou à la face de contact avec la peau du porteur du bracelet. Dans une variante, cette membrane peut être venue de matière avec la face de contact du fond de la boite de montre 1 et/ou de la face de contact du bracelet.

Dans cette montre 1, le module de communication 6 est configuré pour établir une connexion avec un système de réseaux cellulaires en comprenant notamment une carte SIM (acronyme de « Subscriber Identity Module ») ou avec un système de réseaux locaux sans fil WLAN, et est aussi apte à mettre en œuvre des technologies de communication comme par exemple Bluetooth. Dans ces conditions, la montre 1 est apte à échanger des données avec un serveur distant, un ordinateur ou encore un ordiphone.

Par ailleurs, les capteurs environnementaux 8 de la montre 1, sont spécifiquement adaptés pour mesurer des paramètres environnementaux comme par exemple la température, la pression atmosphérique, etc... S'agissant des capteurs 8 comportementaux, ils sont aptes à mesurer tous types de caractéristiques comportementales du porteur de la montre 1 comme par exemple les mouvements ou les gestes réalisés par ce dernier. Pour ce faire, ces capteurs 8 comportementaux peuvent comprendre un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes. Concernant les capteurs 8 physiologiques, ils sont aptes à mesurer les paramètres relatifs au fonctionnement d'un organisme du porteur tels que, par exemple, le pouls, la saturation du sang en oxygène, l'impédance de la peau, la tension artérielle, le rythme respiratoire, l'arythmie respiratoire, la température cutanée, le taux de sudation, la saturation du sang en oxygène ou le débit sanguin.

Un tel procédé comprend une étape d'identification 10 d'un événement relatif à une fonction de la montre 1. Cette montre 1 comprend en effet un ensemble de fonctions. Ces fonctions concernent de manière non-exhaustive et non-limitative : la gestion d'appels téléphoniques, la gestion de messages courts de type SMS ou MMS, la gestion de messages instantanés, la mesure d'une pression atmosphérique, la mesure d'une altitude, la mesure d'une température, la fourniture de résultats sportifs, d'assistance de navigation/guidage, le contrôle de la marche du mouvement, la mesure de fréquence cardiaque, la mesure de nombre de pas, un agenda, une configuration d'un mode de fonctionnement de la montre (par exemple, un mode de fonctionnement peut être la reproduction d'un son ou bruit d'un mouvement mécanique tel que le « tic-tac » ), une alarme etc...

Dans ce contexte, on notera que l'identification d'un événement par l'unité de traitement 2, peut résulter de manière non limitative et non exhaustive de :
- la détermination d'un dépassement d'un seuil par une mesure provenant d'un ou de plusieurs capteurs 8 notamment dans le cas d'une surveillance par cette unité de traitement 2 d'un paramètre comportemental ou physiologique du porteur ou d'un paramètre environnemental, etc...;
- la réception d'un appel téléphonique manqué reçu par l'unité de traitement 2 en provenance du module de communication 6 ;
- la réception d'un message court ou instantané ou encore d'un courrier électronique et reçu par l'unité de traitement 2 de serveurs distants via le module de communication ;
- l'activation d'un mode de fonctionnement de la montre 1 (par exemple le mode relatif au bruit du « tic-tac ») ;
- un déclenchement d'une alarme telle que : une alarme pour le réveil, alarme pour un rendez-vous, alarme pour la prise d'un médicament ;
- etc...

Le procédé comprend ensuite une étape d'envoi 11 d'un signal de configuration relatif audit événement identifié à une interface sonore 3 de la montre 1 comprenant une pluralité d'éléments piézoélectriques 4 montée sur au moins un l'élément de support 9 capable ensemble de produire un son. On notera que cette interface sonore ainsi que nous l'avons évoqué, est aussi apte à générer un message tactile en plus du son/bruit à partir de l'ensemble formé de la pluralité d'éléments piézoélectriques 4 et d'au moins un l'élément de support 9 compris dans l'interface de rendu tactile de cette interface sonore 3. Cette étape 11 comprend une sous-étape de sélection 12 d'un critère de conception du signal de configuration relatif audit événement identifié. Autrement dit, ce critère de conception est défini en fonction de l'événement identifié. Ce critère de conception est de préférence préalablement configuré par le porteur de la montre comme d'autres critères de conception propres à d'autres événements identifiables archivés dans les éléments de mémoire de l'unité de traitement 2. Un tel critère de conception comprend un scénario de fonctionnement des éléments piézoélectrique 4 constituant l'interface sonore 3. Ce critère de conception participe alors à la conception du signal de configuration participant à la génération du signal acoustique et du message tactile destinés à être transmis au porteur de la montre 1. A titre d'exemple, si l'événement identifié est « l'activation d'un mode de fonctionnement de la montre tel que le bruit du tic-tac » alors le critère de conception du signal de configuration comprend un scénario de fonctionnement qui vise à concevoir un signal de configuration spécifiquement défini pour la génération d'un signal acoustique reproduisant le bruit du « tic-tac » d'un mouvement mécanique. Le critère de conception participe à la conception du signal de configuration contribuant à la génération du signal acoustique et d'un message tactile destinés à être transmis au porteur de la montre 1. A titre d'exemple, si l'événement identifié est « le déclenchement de l'alarme de réveil » alors le critère de conception du signal de configuration comprend un scénario de fonctionnement qui vise à concevoir un signal de configuration spécifiquement défini pour la génération d'un signal acoustique et de ce message tactile reproduisant une musique/mélodie douce de réveil accompagnée par une sensation de caresse perçue par le porteur.

Le critère de conception du signal de configuration comprend des données de fonctionnement de l'interface sonore 3. Plus précisément, ces données de fonctionnement de l'interface sonore 3 comportent au moins une fréquence et au moins une amplitude définies pour chaque élément piézoélectrique 4 constituant ladite interface 3. En particulier, ces données de fonctionnement comprennent :
- la durée de diffusion du signal acoustique ;
- au moins un unique instant ou une séquence d'instants de fonctionnement de chaque élément piézoélectrique 4 par rapport à la durée de diffusion soit :
   ▪ un unique instant de fonctionnement durant tout ou partie de la durée de diffusion du signal acoustique, ou
   ▪ une séquence d'instants de fonctionnement durant la durée de diffusion du signal acoustique, et
- pour chaque instant fonctionnement :
   - une fréquence de vibration et une amplitude de vibration, ou
   - une fréquence de vibration et une séquence d'amplitudes, ou
   - une séquence de fréquences de vibration et une séquence d'amplitudes de vibration ou
   - une séquence de fréquences de vibration et une amplitude de vibration.

On notera que la séquence de fréquences de vibration peut comprendre que des fréquences similaires ou sensiblement similaires, ou que des fréquences différentes ou sensiblement différentes, ou encore une combinaison de fréquences similaires et différentes. De même, la séquence d'amplitudes peut comprendre que des amplitudes similaires ou sensiblement similaires, ou que des amplitudes différentes ou sensiblement différentes, ou encore une combinaison d'amplitudes similaires et différentes.

Cette étape 11 comprend ensuite une sous-étape de génération 13 du signal de configuration à partir dudit critère de conception. Lors de cette sous-étape 13, l'unité de traitement 2 conçoit à partir de ce critère de conception, le signal de configuration qui permet de piloter individuellement et/ou distinctement chaque élément piézoélectrique 4 de cette interface sonore 3. Ce signal de configuration est ensuite envoyé par l'unité de traitement 2 à l'interface sonore 3. Un tel signal comprend des instructions de pilotage distinctes de chaque élément piézoélectrique 4 durant la durée de diffusion du signal acoustique associé ou pas à la diffusion du message tactile.

A réception de ce signal de configuration, l'interface sonore 3 émet/diffuse au porteur le signal acoustique associé à la diffusion du message tactile. Ainsi, ce signal acoustique peut correspondre de manière non limitative et non exhaustive à :
- un son/bruit bref et/ou court avec au moins une amplitude variable et/ou au moins une fréquence variable ;
- un son/bruit long avec au moins une amplitude variable et/ou au moins une fréquence variable ;
- une succession de sons brefs et/ou courts, et/ou de sons/bruits longs avec au moins une amplitude variable et/ou au moins une fréquence variable ;
- une musique/mélodie, ou
- une succession de musiques/mélodies.

La diffusion du signal acoustique est accompagnée d'une diffusion du message tactile, ainsi la diffusion de ce son/bruit est associée à :
- la réalisation d'un contour d'une représentation graphique tel qu'un motif/symbole, une lettre, un chiffre de manière tactile c'est-à-dire comme cela est réalisable par le déplacement de la pointe d'un doigt d'un individu sur la peau du porteur ; alternativement, en dehors de l'invention revendiquée, la diffusion peut correspondre à :
   - l'application de la représentation graphique sur la peau du porteur par exemple l'application de la forme d'une lettre ou d'un symbole/motif ;
   - la génération de phénomène ondulatoire et/ou vibratoire visant par exemple à créer pour le porteur une perception tactile douce, agréable, sensuelle ou à l'inverse désagréable.

L'invention concerne aussi un programme d'ordinateur comprenant des instructions de code de programme pour l'exécution des étapes 10 à 13 de ce procédé lorsque ledit programme d'ordinateur est exécuté par l'unité de traitement 2 de la montre 1.

## Revendications

1. Procédé de diffusion d'un signal acoustique et d'un message tactile à un porteur d'une montre, le procédé comprenant une étape d'identification d'un événement relatif à une fonction de cette montre (1) ainsi qu'une étape d'envoi (11) d'un signal de configuration relatif audit événement identifié à une interface sonore (3) de la montre (1) comprenant une pluralité d'éléments piézoélectriques (4) monté sur au moins un élément de support déformable (9), ladite pluralité d'éléments piézoélectriques et ledit au moins un élément de support déformable (9) étant aptes ensemble à produire un son,
**caractérisé en ce que**, l' interface sonore est apte à générer un message tactile en plus du son à partir de la pluralité d'éléments piézoélectriques (4) et d'au moins l'élément de support (9) compris dans une interface de rendu tactile de cette interface sonore (3), et **en ce que** :
- l'étape d'envoi (11) comprend une sous-étape de sélection (12) d'un critère de conception du signal de configuration relatif audit événement identifié, ledit critère de conception comprenant des données de fonctionnement de l'interface sonore (3) comportant au moins une fréquence de vibration et au moins une amplitude de vibration définies pour chaque élément piézoélectrique (4) constituant ladite interface (3),
- le critère de conception participant à la conception du signal de configuration participant à la génération du signal acoustique destiné à être transmis au porteur de la montre (1), ledit critère comprenant un scénario de fonctionnement de ladite pluralité d'éléments piézoélectriques (4) constituant l'interface sonore 3,
- le signal de configuration comprend des instructions de pilotage distinctes de chaque élément piézoélectrique (4) de l'interface sonore (3) durant la durée de diffusion du message, et
- le signal de configuration participe au pilotage distinct de chaque élément piézoélectrique (4) de l'interface sonore (3) contribuant à produire le son et le message tactile, notamment une caresse, susceptibles d'être diffusés au porteur, le message tactile comprenant la réalisation d'un contour d'une représentation graphique comprenant un motif, un symbole, une lettre, et/ou un chiffre de manière tactile.

2. Procédé selon la revendication précédente, **caractérisé en ce que** le critère de conception comprend des données de fonctionnement de l'interface sonore (3) comportant au moins une fréquence de vibration et au moins une amplitude de vibration définies pour chaque élément piézoélectrique (4) constituant ladite interface (3).

3. Procédé selon la revendication précédente, **caractérisé en ce que** les données d'information comprennent la durée de diffusion du signal acoustique.

4. Procédé selon l'une quelconque des revendications précédentes, **caractérisé en ce que** les données d'information comprennent au moins un unique instant ou une séquence d'instants de fonctionnement de chaque élément piézoélectrique (4) par rapport à la durée de diffusion soit :
▪un unique instant de fonctionnement durant tout ou partie de la durée de diffusion du signal acoustique, ou
▪une séquence d'instants de fonctionnement durant la durée de diffusion du signal acoustique.

5. Procédé selon la revendication précédente, **caractérisé en ce que** les données d'information comprennent pour chaque instant de fonctionnement :
- une fréquence de vibration et une amplitude de vibration ;
- une fréquence de vibration et une séquence d'amplitudes de vibration ;
- une séquence de fréquences de vibration et une séquence d'amplitudes de vibration, ou
- une séquence de fréquences de vibration et une amplitude de vibration.

6. Montre (1) notamment connectée, mettant en œuvre le procédé selon l'une quelconque des revendications précédentes, comprenant une unité de traitement (2) et une interface sonore (3) pourvue d'une pluralité d'éléments piézoélectriques (4), ladite unité de traitement (2) étant connectée à ladite interface sonore (3) qui est apte à générer un message tactile en plus du son à partir de la pluralité d'éléments piézoélectriques (4) et d'au moins un élément de support (9) compris dans une interface de rendu tactile de cette interface sonore (3).

7. Montre (1) selon la revendication précédente, **caractérisée en ce que** l'interface sonore (3) est définie dans la boite de montre (1) et/ou dans le bracelet de cette montre (1).

8. Programme d'ordinateur comprenant des instructions de code de programme pour l'exécution des étapes (10 à 13) du procédé selon l'une quelconque des revendications 1 à 5, lorsque ledit programme d'ordinateur est exécuté par une unité de traitement (2) d'une montre (1).

## Patentansprüche

1. Verfahren zur Abgabe eines akustischen Signals und einer taktilen Nachricht an einen Träger einer Uhr, wobei das Verfahren einen Schritt zum Identifizieren eines Ereignisses in Bezug auf eine Funktion dieser Uhr (1) sowie einen Schritt zum Senden (11) eines Konfigurationssignals in Bezug auf das identifizierte Ereignis an eine akustische Schnittstelle (3) der Uhr (1) umfasst, die eine Mehrzahl piezoelektrischer Elemente (4) umfasst, die auf mindestens einem verformbaren Trägerelement (9) montiert sind, wobei die Vielzahl piezoelektrischer Elemente und das mindestens eine verformbare Trägerelement (9) gemeinsam dazu geeignet sind, einen Ton zu erzeugen,
**dadurch gekennzeichnet, dass** die akustische Schnittstelle zusätzlich zum Ton in der Lage ist, aus der Mehrzahl piezoelektrischer Elemente (4) und mindestens dem Trägerelement (9), das in einer taktilen Wiedergabeschnittstelle dieser akustischen Schnittstelle (3) enthalten ist, eine taktile Nachricht zu erzeugen, und dass:
- der Sendeschritt (11) einen Unterschritt der Auswahl (12) eines Entwurfskriteriums des Konfigurationssignals in Bezug auf das identifizierte Ereignis umfasst, wobei das Entwurfskriterium Betriebsdaten der akustischen Schnittstelle (3) umfasst, die mindestens eine Vibrationsfrequenz und mindestens eine Vibrationsamplitude enthalten, die für jedes piezoelektrische Element (4), das diese Schnittstelle (3) bildet, definiert sind,
- wobei das Entwurfskriterium zur Auslegung des Konfigurationssignals beiträgt, das zur Erzeugung des akustischen Signals beiträgt, das an den Träger der Uhr (1) zu übertragen ist, wobei das Kriterium ein Betriebsszenario dieser Vielzahl piezoelektrischer Elemente (4) umfasst, die die akustische Schnittstelle (3) bilden,
- das Konfigurationssignal umfasst unterschiedliche Ansteueranweisungen für jedes piezoelektrische Element (4) der akustischen Schnittstelle (3) während der Dauer der Abgabe der Nachricht, und
- das Konfigurationssignal trägt zur getrennten Ansteuerung jedes piezoelektrischen Elements (4) der akustischen Schnittstelle (3) bei, das zur Erzeugung des Tons und der taktilen Nachricht, insbesondere einer Liebkosung, beiträgt, die an den Träger abgegeben werden können, wobei die taktile Nachricht die Ausführung einer Kontur einer grafischen Darstellung umfasst, die ein Muster, ein Symbol, einen Buchstaben und/oder eine Ziffer umfasst, auf taktile Weise.

2. Verfahren nach dem vorstehenden Anspruch, **dadurch gekennzeichnet, dass** das Entwurfskriterium Betriebsdaten der akustischen Schnittstelle (3) umfasst, die mindestens eine Vibrationsfrequenz und mindestens eine Vibrationsamplitude enthalten, die für jedes piezoelektrische Element (4), das diese Schnittstelle (3) bildet, definiert sind.

3. Verfahren nach dem vorstehenden Anspruch, **dadurch gekennzeichnet, dass** die Informationsdaten die Dauer der Abgabe des akustischen Signals umfassen.

4. Verfahren nach einem der vorstehenden Ansprüche, **dadurch gekennzeichnet, dass** die Informationsdaten mindestens einen einzigen Zeitpunkt oder eine Folge von Zeitpunkten des Betriebs jedes piezoelektrischen Elements (4) in Bezug auf die Abgabedauer umfassen, und zwar:
▪einen einzigen Betriebszeitpunkt während der gesamten oder eines Teils der Dauer der Abgabe des akustischen Signals oder
▪eine Folge von Betriebszeitpunkten während der Dauer der Abgabe des akustischen Signals.

5. Verfahren nach dem vorstehenden Anspruch, **dadurch gekennzeichnet, dass** die Informationsdaten für jeden Betriebszeitpunkt Folgendes umfassen:
- eine Vibrationsfrequenz und eine Vibrationsamplitude;
- eine Vibrationsfrequenz und eine Folge von Vibrationsamplituden;
- eine Folge von Vibrationsfrequenzen und eine Folge von Vibrationsamplituden oder
- eine Folge von Vibrationsfrequenzen und eine Vibrationsamplitude.

6. Uhr (1), insbesondere verbunden, die das Verfahren nach einem der vorstehenden Ansprüche umsetzt, umfassend eine Verarbeitungseinheit (2) und eine akustische Schnittstelle (3) mit einer Mehrzahl piezoelektrischer Elemente (4), wobei die Verarbeitungseinheit (2) mit der akustischen Schnittstelle (3) verbunden ist, die in der Lage ist, zusätzlich zum Ton aus der Mehrzahl piezoelektrischer Elemente (4) und aus mindestens einem Trägerelement (9), das in einer taktilen Wiedergabeschnittstelle dieser akustischen Schnittstelle (3) enthalten ist, eine taktile Nachricht zu erzeugen.

7. Uhr (1) nach dem vorstehenden Anspruch, **dadurch gekennzeichnet, dass** die akustische Schnittstelle (3) im Uhrengehäuse (1) und/oder im Armband dieser Uhr (1) vorgesehen ist.

8. Computerprogramm, das Programmcodes umfasst, die zur Ausführung der Schritte (10 bis 13) des Verfahrens gemäß einem der Ansprüche 1 bis 5 eingerichtet sind, wenn das Computerprogramm von einer Verarbeitungseinheit (2) einer Uhr (1) ausgeführt wird.

## Claims

1. Method for diffusing an acoustic signal and a tactile message to a wearer of a watch, the method comprising a step for identifying an event relative to a function of this watch (1) and a step for sending (11) a configuration signal relative to said identified event to an audio interface (3) of the watch (1) comprising a plurality of piezoelectric elements (4) fitted on at least one distortable supporting element (9), said plurality of piezoelectric elements and said at least one distortable supporting element (9) being capable, together, of producing a sound,
**characterised in that** the audio interface is capable of generating a tactile message in addition to the sound using the plurality of piezoelectric elements (4) and at least the supporting element (9) comprised in a tactile display interface of this audio interface (3), and **in that**:
- the sending step (11) comprises a substep (12) for selecting a design criterion for the configuration signal relative to the identified event, said design criterion comprising functioning data for the audio interface (3) comprising at least one vibration frequency and at least one vibration amplitude defined for each piezoelectric element (4) constituting said interface (3),
- the design criterion used in the design of the configuration signal contributing to the generation of the acoustic signal to be transmitted to the wearer of the watch (1), said criterion comprising a functioning scenario for said plurality of piezoelectric elements (4) constituting the audio interface 3,
- the configuration signal comprises separate control instructions for each piezoelectric element (4) of the audio interface (3) during the duration of the diffusion of the message, and
- the configuration signal contributes to separately controlling each piezoelectric element (4) of the audio interface (3), contributing to the production of the sound and the tactile message, in particular a gentle touch, which can be sent to the wearer; the tactile message comprising the tactile reproduction of the outline of a graphical representation comprising a pattern, a symbol, a letter and/or a number.

2. Method according to the preceding claim, **characterised in that** the design criterion comprises functioning data for the audio interface (3), comprising at least one vibration frequency and at least one vibration amplitude defined for each piezoelectric element (4) constituting said interface (3).

3. Method according to the preceding claim, **characterised in that** the information data comprises the duration of the diffusion of the acoustic signal.

4. Method according to any of the preceding claims, **characterised in that** the information data comprises at least a single functioning instant or a sequence of functioning instants of each piezoelectric element (4) relative to the duration of the diffusion, namely:
▪a single functioning instant during all or part of the duration of the diffusion of the acoustic signal, or
▪a sequence of functioning instants during the duration of the diffusion of the acoustic signal.

5. Method according to the preceding claim, **characterised in that** the information data comprises, for each functioning instant:
- a vibration frequency and a vibration amplitude;
- a vibration frequency and a sequence of vibration amplitudes;
- a sequence of vibration frequencies and a sequence of vibration amplitudes, or
- a sequence of vibration frequencies and a vibration amplitude.

6. Watch (1), particularly a smartwatch, using the method according to any of the preceding claims, comprising a processing unit (2) and an audio interface (3) equipped with a plurality of piezoelectric elements (4), said processing unit (2) being connected to said audio interface (3) which is capable of generating a tactile message in addition to the sound using the plurality of piezoelectric elements (4) and of at least one supporting element (9) comprised in a tactile display of this audio interface (3).

7. Watch (1) according to the preceding claim, **characterised in that** the audio interface (3) is defined in the watchcase (1) and/or in the bracelet of this watch (1).

8. Computer program comprising program code instructions for executing the steps (10 to 13) in the method according to any of claims 1 to 5 when said computer program is executed by a processing unit (2) in a watch (1).
